# FASCICULE DE BREVET EUROPEEN

(11) **EP 1 844 644 B1**
(45) Date de publication et mention de la délivrance du brevet: **01.07.2009**
(21) Numéro de dépôt: 07105602.2
(22) Date de dépôt: 04.04.2007
(51) Int. Cl.: A01D 82/02

(54) **Rouleau conditionneur de faucheuse-conditionneuse, procédé de fabrication d'un tel rouleau et faucheuse-conditionneuse équipée d'un tel rouleau**
Aufbereitungswalze von Mähknickzetter, Herstellungsverfahren einer solchen Walze und Mähknickzetter, der mit einer solchen Walze ausgestattet ist
Mower-conditioner conditioning roller, method of manufacturing such a roller and mower-conditioner equipped with such a roller

(30) Priorité: 11.04.2006 FR 0651298
(43) Date de publication de la demande: 17.10.2007
(73) Titulaire: KUHN S.A., 67700 Saverne (FR)
(72) Inventeur: Wattron, Bernard, 67700 Haegen (FR)
(74) Mandataire: Andres, Jean-Claude

(56) Documents cités:
- FR-A1- 2 390 083
- US-B1- 6 346 067

## Description

L'invention concerne un rouleau conditionneur de faucheuse-conditionneuse, un procédé de fabrication d'un tel rouleau et une faucheuse-conditionneuse équipée d'un tel rouleau.

Les faucheuses-conditionneuses comportent notamment un bâti portant un dispositif de coupe de végétaux et un dispositif de conditionnement des végétaux coupés. Ce dernier est situé immédiatement après le dispositif de coupe. Ces faucheuses-conditionneuses sont accrochées à l'avant ou à l'arrière de tracteurs agricoles qui permettent de les animer et de les déplacer.

Le but du conditionnement du fourrage est de diminuer la période pendant laquelle la récolte risque d'être endommagée par la pluie. En effet, le conditionnement permet de réduire la durée globale du séchage et de synchroniser le séchage des tiges et des feuilles.

Le conditionnement permet d'éclater la pellicule de protection des plantes en vue d'augmenter la vitesse de séchage des plantes et de favoriser un séchage uniforme. Le conditionnement est très efficace quand il est pratiqué au moment de la coupe.

L'éclatement de la pellicule de protection se fait en passant la plante entre des rouleaux simples ou à cannelures, le pincement qui en résulte plie ou fait éclater les brins d'herbe à 5-10 centimètres d'intervalles et peut contusionner les feuilles. Ainsi, le conditionnement a pour objet d'obtenir un certain degré de traitement du fourrage en vue d'optimiser le séchage, tout en limitant la fragmentation et l'effeuillage.

Il existe divers systèmes conditionneurs à rouleaux, les principaux étant :
- les conditionneurs à rouleaux avec un revêtement en caoutchouc dur, et
- les conditionneurs à rouleaux avec des profilés en acier.

Les conditionneurs à rouleaux profilés en caoutchouc sont connus, par exemple, par les brevets FR 2 390 083 et US 3 732 670. Selon cette technique, les produits de récolte sont acheminés dans un orifice d'entrée ménagé entre deux rouleaux de conditionnement, ces rouleaux présentant sur leur périphérie extérieure des reliefs ou protubérances s'étendant à une certaine distance les uns des autres, les reliefs d'un rouleau de conditionnement coopérant avec des dépressions formées entre les reliefs de l'autre rouleau de conditionnement.

Divers reliefs ont été développés en fonction des plantes à conditionner, notamment par exemple pour des plantes fragiles telles que les trèfles, luzernes et plus généralement les légumineuses. Dans ces dispositifs l'intensité du conditionnement est en sus réglée par la variation de pression des rouleaux l'un contre l'autre.

Les conditionneurs à rouleaux caoutchouc sont constitués par une âme cylindrique sur laquelle est rapporté le revêtement en caoutchouc. Ces rouleaux sont très coûteux à fabriquer et présentent une durée de vie assez réduite.

Les conditionneurs comportant des rouleaux avec des profilés métalliques ont été décrits, par exemple, dans le document US 6 346 067. Ces conditionneurs disposent d'une durée de vie améliorée mais présentent plusieurs inconvénients notamment en raison de la difficulté pour réaliser des reliefs satisfaisants et pour fabriquer de manière industrielle avec un coût raisonnable des rouleaux performants.

En raison de la difficulté d'obtention de profilés métalliques spécifiquement adaptés pour cette application, l'efficacité de conditionnement des plants de différentes sortes avec de tels rouleaux est assez aléatoire.

Le poids élevé des rouleaux connus dans les faucheuses-conditionneuses pose également problème, notamment en raison de la largeur de plus en plus grande des machines qui induit la nécessité de moyens support plus conséquents et donc plus coûteux.

L'invention a donc pour objectif de résoudre ces principales difficultés en proposant une nouvelle catégorie de rouleaux conditionneurs pour faucheuse-conditionneuse, de fabrication industrielle aisée et à moindre coût et de durée de vie élevée.

La présente invention concerne un rouleau conditionneur de faucheuse-conditionneuse comprenant un relief de surface sur la totalité de sa périphérie, lequel rouleau de forme globalement cylindrique est creux et possède une paroi d'épaisseur réduite comportant directement des reliefs, ledit rouleau étant de fait sans âme cylindrique. Le corps du rouleau est formé avec au moins une tôle structurée comportant des reliefs obtenus par pliage ou roulage. Les reliefs peuvent être anguleux et nombreux sur toute la périphérie en vue d'obtenir un conditionnement intensif.

L'invention permet avantageusement de réaliser des rouleaux métalliques disposant d'une durée de vie élevée, avec des reliefs variés, ces rouleaux étant particulièrement bien adaptés pour un conditionnement optimal des plantes après la coupe.

La déformation contrôlée d'une tôle permet d'obtenir un cylindre avec des reliefs, disposant d'un poids réduit au minimum puisque seule la partie utile pour le conditionnement des plantes est fabriquée. Cela présente un avantage déterminant par rapport aux rouleaux existants comportant des structures avec des éléments rapportés sur des cylindres de manière à former des reliefs.

Le faible poids des rouleaux conditionneurs selon l'invention permet de diminuer le poids des machines les utilisant et également l'énergie mise en oeuvre pour le travail dans les champs.

Les rouleaux selon l'invention sont simples à fabriquer, et cela avec un minimum de matière, le coût de fabrication est donc réduit de façon importante par rapport aux rouleaux existants et aux procédés connus de réalisation de ces rouleaux.

D'autres caractéristiques et avantages de l'invention se dégageront de la description qui va suivre en regard des dessins annexés qui ne sont donnés qu'à titre d'exemples non limitatifs.
La figure 1 présente une coupe d'une machine avec une barre de coupe à l'arrière de laquelle sont disposés deux rouleaux selon l'invention.
La figure 2 est une vue en perspective d'un rouleau selon l'invention.
La figure 3 illustre une section de rouleau avec des nervures à profil carré ou rectangulaire.
La figure 4 montre une section d'un rouleau avec des nervures à profil triangulaire.

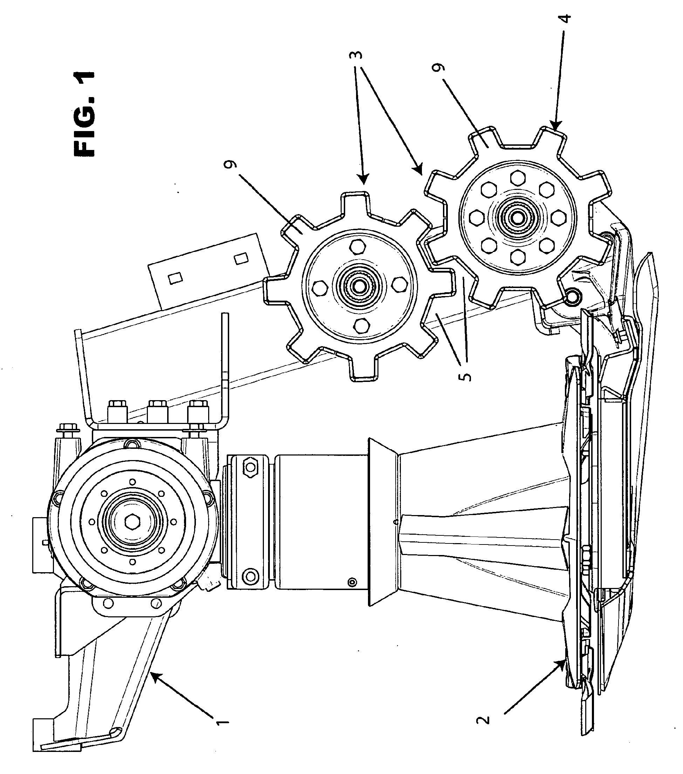

Comme le montre la figure 1, la faucheuse-conditionneuse se compose d'un bâti 1 pouvant être relié à un tracteur et portant la barre de coupe 2, deux rouleaux de conditionnement 3 sensiblement identiques et des moyens d'entraînement animés depuis le tracteur. Les rouleaux de conditionnement 3 selon l'invention peuvent être disposés immédiatement après une barre de coupe 2.

Chaque rouleau de conditionnement 3 est de forme globalement cylindrique et creux. Il comporte une paroi en tôle d'épaisseur réduite avec des reliefs 4 sur la totalité de sa périphérie. Ledit rouleau 3 est ainsi sans âme cylindrique intérieure.

Ces rouleaux 3 sont prévus avec des reliefs 4 et sont configurés pour fonctionner ensemble, en synergie, pour traiter les plantes en les faisant passer entre eux vers le côté arrière de la machine. Avantageusement, les reliefs 4 d'un rouleau de conditionnement 3 coopèrent, à la manière des dentures d'engrenages, avec des dépressions 5 formées par les reliefs 4 de l'autre rouleau de conditionnement tel que cela est illustré sur la figure 1.

Les rouleaux 3 sont animés en rotation de manière à tourner en convergence à l'avant et peuvent comporter des moyens de réglage des paramètres de conditionnement classiquement employés avec d'autres catégories de rouleaux conditionneurs tels que par exemple des moyens de serrage pour le contrôle de l'espacement entre les rouleaux 3.

Les moyens de réglage de l'intensité de conditionnement des plants avec les rouleaux conditionneurs 3 selon l'invention sont identiques aux systèmes traditionnels connus, notamment ceux agissant sur la pression entre les rouleaux 3.

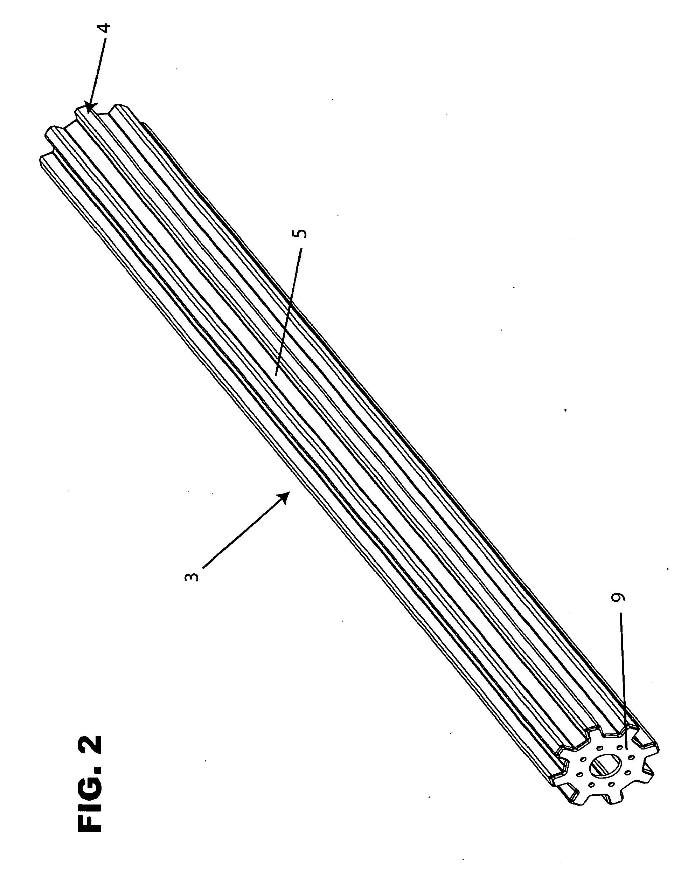

La figure 2 illustre un rouleau de conditionnement 3 selon l'invention dans lequel le corps du rouleau est formé avec au moins une tôle comportant des reliefs 4 obtenus par pliage ou par roulage, le tout étant structuré de manière à former une forme globalement cylindrique.

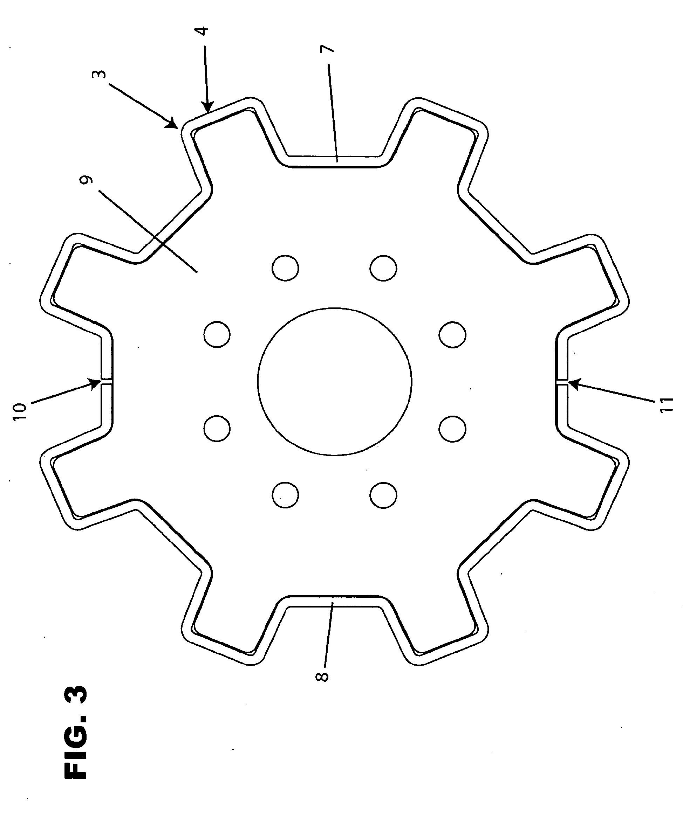

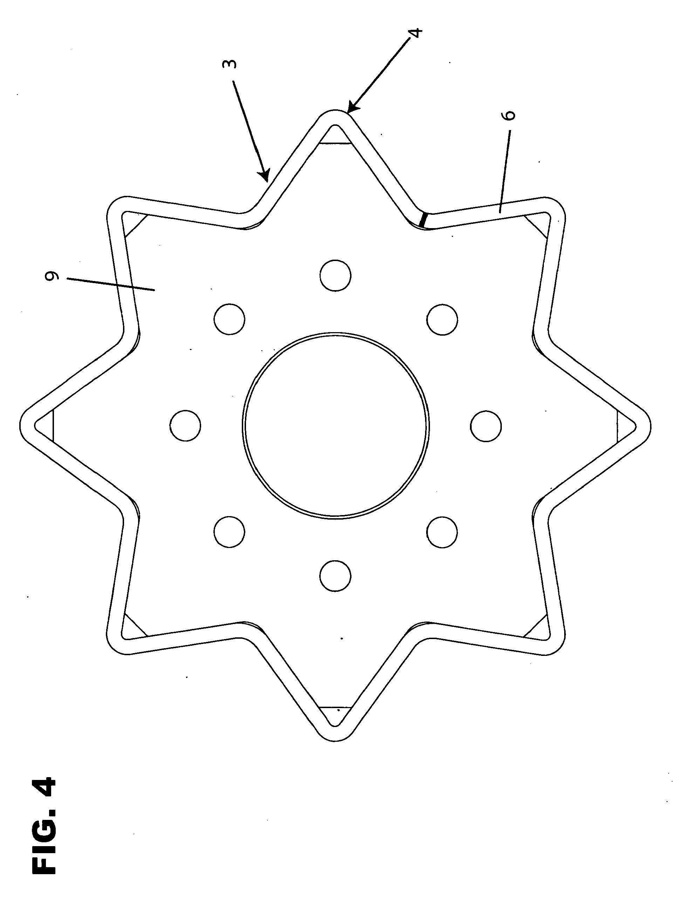

Avantageusement les reliefs 4 sont prévus de forme carrée ou rectangulaire (figure 3) ou triangulaire (figure 4) avec des arêtes relativement vives pour une meilleure efficacité de conditionnement des plantes. Le nombre de ces reliefs 4 est compris entre six et dix sur chaque rouleau 3. Avec un nombre important de reliefs 4 les plantes subissent davantage d'impacts lors de leur passage entre les rouleaux 3, ce qui augmente l'intensité du conditionnement.

Les reliefs 4 du rouleau conditionneur 3 sont formés sur la longueur complète du cylindre, tel que cela est représenté sur la figure 2. Les reliefs 4 correspondent à des nervures réalisées dans la tôle pouvant être plane au départ.

Selon l'invention, le rouleau 3 comporte donc au moins une tôle structurée, c'est-à-dire déformée selon des techniques connues dans le domaine, par exemple par roulage ou pliage, conformée en portion de cylindre ou en cylindre complet, de manière à former en final, après soudure des bouts ou assemblage des différentes parties, un cylindre fermé disposant d'un relief sur la totalité de sa périphérie.

Ainsi il est envisageable de réaliser un cylindre au moyen d'une tôle structurée unique 6 conformée en cylindre et de souder la tôle sur elle-même par ses deux grands côtés, c'est-à-dire dans la longueur du cylindre formé, ou d'assembler différentes tôles 7 et 8 conformées en portions de cylindre, avantageusement deux demi cylindres, pour former le cylindre complet.

La fermeture de la tôle sur elle-même ou l'assemblage des différentes tôles les unes sur les autres est réalisé de préférence par soudure toutefois, d'autres moyens peuvent être employés sans sortir du cadre de l'invention.

Une fois fabriqué par roulage ou pliage de la tôle structurée, le cylindre est fermé à ses deux extrémités latérales par des flasques 9 qui ont une forme pratiquement identique à celle de la section du cylindre.

Les flasques 9 sont pourvus des moyens nécessaires pour l'agencement et la fixation des rouleaux 3 sur le bâti 1 et leur liaison avec les pièces assurant leur entraînement en rotation durant le travail.

Avantageusement les deux flasques 9 sont également soudés sur les extrémités latérales du cylindre.

De nombreux reliefs 4 sont envisageables pour les rouleaux conditionneurs 3. Il a été trouvé particulièrement favorable de réaliser des reliefs 4 à section carrée ou rectangulaire, tel que cela est illustré sur la figure 3, ou de forme triangulaire tel que représenté sur la figure 4, des profils agressifs peuvent permettre d'augmenter l'intensité du conditionnement.

Il est envisageable d'adapter les reliefs 4 des rouleaux 3 et les réglages de l'intensité du conditionnement en fonction des plantes à traiter.

La figure 3 qui illustre un profil avec des reliefs 4 carrés ou rectangulaires montre également l'agencement de deux tôles 7 et 8, conformées en deux demi cylindres symétriques, soudées sur les lignes de jonction 10 et 11 de manière à former un cylindre complet.

La figure 4 illustre un type de rouleau 3, comportant des reliefs 4 triangulaires. Comme pour les autres reliefs envisageables les protubérances 4 d'un rouleau 3 s'emboîtent dans les dépressions 5 d'un rouleau 3 sensiblement identique, de manière à former une zone de pincement ou d'écrasement permettant le conditionnement des plantes coupées provenant de la barre de coupe 2.

L'invention concerne également un procédé de fabrication d'un rouleau conditionneur 3 de faucheuse-conditionneuse caractérisé par :
- la fabrication d'un cylindre avec des reliefs 4 par simple roulage ou pliage d'au moins une tôle,
- l'assemblage dudit cylindre avec deux flasques 9 de manière à obturer ses extrémités latérales.

Avantageusement selon l'invention la tôle est structurée lors du roulage ou pliage et refermée par soudure sur elle-même ou avec une tôle symétrique de manière à former un cylindre fermé disposant de reliefs carrés, rectangulaires ou triangulaires en surface sur la totalité de sa périphérie.

Plusieurs variantes sont possibles pour le rouleau conditionneur 3 décrit précédemment, il peut notamment être envisagé divers métaux constitutifs, par ailleurs, comme cela a déjà été indiqué, des reliefs variés peuvent être réalisés, sans sortir du cadre de l'invention.

La formation du cylindre par assemblage entre une, deux ou plusieurs tôles 6, 7, 8 peut être réalisée de diverses manières et pas seulement par soudure, même si cela apparaît moins favorable, sans sortir du cadre de l'invention.

Les dimensions du rouleau 3, la profondeur des reliefs 4 ainsi que le mode d'emboîtement entre différents rouleaux conditionneurs 3 peuvent être très variables sans sortir du cadre de l'invention.

L'invention concerne aussi une faucheuse-conditionneuse comportant un bâti 1, une barre de coupe 2 et des rouleaux conditionneurs 3 réalisés tel que cela a été décrit ci-avant.

Bien entendu, l'invention n'est pas limitée aux modes de réalisation décrits et représentés à titre d'exemples, mais n'est limitée que par le domaine de protection tel que défini dans les revendications.

## Revendications

1. Rouleau conditionneur (3) de faucheuse-conditionneuse, lequel rouleau (3) a une forme globalement cylindrique, possède une paroi d'épaisseur réduite et comprend un relief de surface sur la totalité de sa périphérie, ***caractérisé par le fait que*** le rouleau (3) est creux et sans âme cylindrique et que sa paroi d'épaisseur réduite forme directement des reliefs (4).

2. Rouleau conditionneur de faucheuse-conditionneuse selon la revendication *1, **caractérisé par le fait que*** le corps du rouleau (3) est formé avec au moins une paroi en tôle structurée (6, 7, 8) comportant des reliefs (4) obtenus par pliage ou roulage.

3. Rouleau conditionneur de faucheuse-conditionneuse selon la revendication *2, **caractérisé par le fait que*** la tôle structurée (6, 7, 8) comporte des reliefs (4) de forme rectangulaire ou carrée.

4. Rouleau conditionneur de faucheuse-conditionneuse selon la revendication *2, **caractérisé par le fait que*** la tôle structurée (6, 7, 8) comporte des reliefs (4) de forme triangulaire.

5. Rouleau conditionneur de faucheuse-conditionneuse selon l'une quelconque des revendications 1 à 4, ***caractérisé par le fait que*** les reliefs (4) présentent des arêtes relativement vives.

6. Rouleau conditionneur de faucheuse-conditionneuse selon l'une quelconque des revendications 1 à 5, ***caractérisé par le fait* qu'**il comporte de six à dix reliefs (4) sur la totalité de sa périphérie.

7. Rouleau conditionneur de faucheuse-conditionneuse selon l'une quelconque des revendications 2 à 6, ***caractérisé par le fait* qu'**une tôle structurée (6) pliée ou roulée est fermée par soudure sur elle-même sur la longueur du cylindre.

8. Rouleau conditionneur de faucheuse-conditionneuse selon l'une quelconque des revendications 2 à 6, ***caractérisé par le fait que*** plusieurs tôles structurées (7, 8) pliées et de forme partiellement cylindrique sont assemblées par soudure sur leurs grandes longueurs de manière à former une forme globalement cylindrique.

9. Rouleau conditionneur de faucheuse-conditionneuse selon l'une quelconque des revendications précédentes, ***caractérisé par le fait* que** le rouleau (3) comporte deux flasques (9) fermant ses extrémités latérales.

10. Rouleau conditionneur de faucheuse-conditionneuse selon la revendication 9, ***caractérisé par le fait* que** les flasques (9) sont soudées sur les extrémités latérales du cylindre formé par au moins une tôle structurée (6, 7, 8) pliée ou roulée.

11. Procédé de fabrication d'un rouleau conditionneur (3) de faucheuse-conditionneuse, ***caractérisé par :***
- la fabrication de la paroi d'un cylindre par roulage ou pliage d'au moins une tôle (6, 7, 8) d'épaisseur réduite avec des reliefs (4) formés directement par la paroi.
- l'assemblage dudit cylindre avec deux flasques (9) de manière à obturer ses extrémités latérales.

12. Procédé de fabrication d'un rouleau conditionneur de faucheuse-conditionneuse selon la revendication 11, ***caractérisé par le fait qu***'une tôle (6) est structurée par roulage ou pliage et refermée par soudure sur elle-même, ou avec une ou plusieurs tôles semblables (7, 8) structurées par roulage ou pliage et assemblées par soudure, de manière à former un cylindre fermé avec des reliefs (4) carrés, rectangulaires ou triangulaires en surface sur la totalité de sa périphérie.

13. Faucheuse-conditionneuse, ***caractérisée par le fait* qu'**elle comporte des rouleaux conditionneurs (3) selon l'une quelconque des revendications 1 à 10.

14. Faucheuse-conditionneuse, ***caractérisée par le fait* qu'**elle comporte des rouleaux conditionneurs (3) fabriqués selon le procédé de la revendication 11 ou 12.

## Claims

1. Mower-conditioner conditioning roller (3), which roller (3) has a cylindrical overall shape, a wall of reduced thickness and comprises a superficial relief over the entirety of its periphery, ***characterized in* that** the roller (3) is hollow and has no cylindrical core and ***in* that** its wall of reduced thickness directly forms reliefs (4).

2. Mower-conditioner conditioning roller according to claim 1, ***characterized in* that** the body of the roller (3) is formed with at least one wall made of structured plate (6, 7, 8) comprising reliefs (4) obtained by bending or rolling.

3. Mower-conditioner conditioning roller according to claim 2, ***characterized in* that** the structured plate (6, 7, 8) comprises reliefs (4) of rectangular or square shape.

4. Mower-conditioner conditioning roller according to claim 2, ***characterized in* that** the structured plate (6, 7, 8) comprises reliefs (4) of triangular shape.

5. Mower-conditioner conditioning roller according to any one of claims 1 to 4, ***characterized in* that** the reliefs (4) have relatively sharp edges.

6. Mower-conditioner conditioning roller according to any one of claims 1 to 5, **characterized in that** it comprises six to ten reliefs (4) over the entirety of its periphery.

7. Mower-conditioner conditioning roller according to any one of claims 2 to 6, ***characterized in* that** a bent or rolled structured plate (6) is closed up by welding it together along the length of the cylinder.

8. Mower-conditioner conditioning roller according to any one of claims 2 to 6, ***characterized in* that** several bent and partially cylindrically-shaped structured plates (7, 8) are welded to one another along their longest sides to form a shape that is overall cylindrical.

9. Mower-conditioner conditioning roller according to any one of the preceding claims, ***characterized in* that** the roller (3) comprises two end-plates (9) closing its lateral ends.

10. Mower-conditioner conditioning roller according to claim 9, ***characterized in* that** the end-plates (9) are welded to the lateral ends of the cylinder formed by at least one bent or rolled structured plate (6, 7, 8).

11. Method of manufacturing a mower-conditioner conditioning roller (3), ***characterized by:***
- the manufacturing of the wall of a cylinder by rolling or by bending of at least one plate (6, 7, 8) of reduced thickness with reliefs (4) directly formed by the wall,
- the assembly of the said cylinder with two end-plates (9) to close off its lateral ends.

12. Method of manufacturing a mower-conditioner conditioning roller according to claim 11, ***characterized in* that** a plate (6) is structured by rolling or bending and closed up by welding it together, or to one or more similar plates (7, 8) structured by rolling or bending and joined together by welding, so as to form a closed cylinder having square, rectangular or triangular reliefs (4) at the surface over the entirety of its periphery.

13. Mower-conditioner ***characterized in* that** it comprises conditioning rollers (3) as claimed in any one of claims 1 to 10.

14. Mower-conditioner ***characterized in* that** it comprises conditioning rollers (3) manufactured using the method of claim 11 or 12.

## Patentansprüche

1. Aufbereitungswalze (3) eines Mähknickzetters, wobei die Walze (3) eine global zylindrische Form hat, eine Wand von geringerer Stärke besitzt und ein Oberflächenrelief über seiner gesamten Peripherie aufweist, ***dadurch gekennzeichnet,* dass** die Walze (3) hohl und ohne zylindrischen Kern ist, und dass ihre Wand von geringerer Stärke direkt Reliefs (4) bildet.

2. Aufbereitungswalze eines Mähknickzetters nach Anspruch 1, ***dadurch gekennzeichnet,* dass** der Körper der Walze (3) mit mindestens einer Wand aus Strukturbleche (6, 7, 8), mit durch Falzen oder Rollen hergestellte Reliefs (4), gebildet ist.

3. Aufbereitungswalze eines Mähknickzetters nach Anspruch 2, ***dadurch gekennzeichnet,* dass** das Strukturblech (6, 7, 8) Reliefs (4) von rechteckiger oder quadratischer Form umfasst.

4. Aufbereitungswalze eines Mähknickzetters nach Anspruch 2, ***dadurch gekennzeichnet,* dass** das Strukturblech (6, 7, 8) Reliefs (4) von dreieckiger Form umfasst.

5. Aufbereitungswalze eines Mähknickzetters nach irgend einem der Ansprüche 1 bis 4, ***dadurch gekennzeichnet,* dass** die Reliefs (4) relativ scharfe Kanten aufweisen.

6. Aufbereitungswalze eines Mähknickzetters nach irgend einem der Ansprüche 1 bis 5, ***dadurch gekennzeichnet,* dass** sie sechs bis zehn Reliefs (4) über ihrer gesamten Peripherie umfasst.

7. Aufbereitungswalze eines Mähknickzetters nach irgend einem der Ansprüche 2 bis 6, ***dadurch gekennzeichnet,* dass** ein gefalztes oder gerolltes Strukturblech (6) durch Schweißen auf sich selbst auf der Länge des Zylinders geschlossen wird.

8. Aufbereitungswalze eines Mähknickzetters nach irgend einem der Ansprüche 2 bis 6, ***dadurch gekennzeichnet,* dass** mehrere gefalzte Strukturbleche (7, 8) von teilweise zylindrischer Form durch Verschweißen auf ihren großen Längen zusammengefügt werden, um eine global zylindrische Form zu bilden.

9. Aufbereitungswalze eines Mähknickzetters nach irgend einem der vorhergehenden Ansprüche, ***dadurch gekennzeichnet,* dass** die Walze (3) zwei Flansche (9) umfasst, die ihre seitlichen Enden verschließen.

10. Aufbereitungswalze eines Mähknickzetters nach Anspruch 9, ***dadurch gekennzeichnet,* dass** die Flansche (9) auf die seitlichen Enden des Zylinders, der von mindestens einem gefalzten oder gerollten Strukturblech (6, 7, 8) gebildet ist, geschweißt werden.

11. Verfahren zur Herstellung einer Aufbereitungswalze (3) eines Mähknickzetters, ***gekennzeichnet durch:***
- die Herstellung der Wand eines Zylinders **durch** Rollen oder Falzen mindestens eines Blechs (6, 7, 8) von geringerer Stärke mit direkt von der Wand gebildeten Reliefs (4),
- die Zusammenfügung des Zylinders mit zwei Flanschen (9), um seine seitlichen Enden zu verschließen.

12. Verfahren zur Herstellung einer Aufbereitungswalze eines Mähknickzetters nach Anspruch 11, ***dadurch gekennzeichnet,* dass** ein Blech (6) durch Rollen oder Falzen strukturiert und durch Schweißen auf sich selbst wieder geschlossen wird, oder mit einem oder mehreren ähnlichen durch Rollen oder Falzen strukturiert und durch Schweißen zusammengefügten Blechen (7, 8), um einen geschlossenen Zylinder mit quadratischen, rechteckigen oder dreieckigen Reliefs (4) an der Oberfläche über seiner gesamten Peripherie zu bilden.

13. Mähknickzetter, ***dadurch gekennzeichnet,* dass** er Aufbereitungswalzen (3) nach irgend einem der Ansprüche 1 bis 10 umfasst.

14. Mähknickzetter, ***dadurch gekennzeichnet,* dass** er Aufbereitungswalzen (3) umfasst, die nach dem Verfahren des Anspruchs 11 oder 12 hergestellt werden.
